# EUROPEAN PATENT SPECIFICATION

(11) **EP 2 453 180 B1**
(45) Date of publication and mention of the grant of the patent: **21.08.2019**
(21) Application number: 11008961.2
(22) Date of filing: 10.11.2011
(51) Int. Cl.: F24D 19/10, F24D 10/00

(54) **Heating system with sensor accelerator**
Heizsystem mit Sensorbeschleuniger
Système de chauffage avec accélérateur de capteur

(30) Priority: 10.11.2010 DK 201001021
(43) Date of publication of application: 16.05.2012
(73) Proprietor: Danfoss A/S, 6430 Nordborg (DK)
(72) Inventor: Thorsen, Jan Eric, 6440 Augustenborg (DK); Boysen, Herman, 6400 Sønderborg (DK)

(56) References cited:
- EP-A2- 0 120 493
- WO-A1-97/36138
- CN-A- 1 946 971
- DE-A1- 3 142 549

## Description

The present invention relates to a set up especially suited for district heating systems connected to a heat exchanger for the supply of hot domestic water. The setup introduces an accelerator positioned and adapted to ensure a quick response of the temperature sensor, and to at least reduce heat losses in the heat exchanger during stand-by of the tapping of hot domestic water.

### BACKGROUND

In a typical set up of smaller systems providing hot water for the use in e.g. housings comprising one family houses or dwellings in multi-family houses, such a system typically comprises a number of heating devices such as a heat exchanger and a pluralityt of heating devices such as, but not limited to, radiators and floor heating systems. The heat exchanger is usually adapted to heating up domestic water, especially water to be tapped as hot water, e.g. in baths etc.

A network of lines transfer a heat transfer medium between the devices, the network comprising supply network connected to the heating devices and the primary side of the heat exchanger, where the heat transfer medium may be water. The flow to the heat exchanger typically is regulated by first regulating means thus as a thermostat comprising a temperature sensor and means to adjust to a chosen set point.

A hot water extraction line system comprising the extraction line and a water supply line is connected to the secondary side of the heat exchanger, where the hot water extraction line is preferably connected to means to tap the hot water when desired.

The temperature sensor is positioned in thermal communication with the hot extraction water in the secondary side of the heat exchanger.

The first flow regulating means adjusts the flow of fluid to the primary side of the heat exchanger in response to the temperature measured by the temperature sensor by adjusting the flow to obtain a (adjustable) set point of the measured temperature.

During standby of the hot water extraction system there are two situations. The first one is flow regulation where there is no flow to the primary side, which leads to a substantially long response time for opening the primary flow for the user to get hot tapped water of the desired temperature. Especially if the hot water tapping is low, due to the proportional characteristic of the controller.

The second one is to ensure a permanent (optionally dynamic) flow to the primary side, which leads to losses of energy since the heat exchanger is constantly heated. This often involves a combined flow and pressure regulation, and a thermostat.

Such a system, however, especially for slow sensors has the drawbacks of the energy needed and delays in time in relation to the temperature sensor. It takes energy to heat up the water in the secondary side of the heat exchanger, and this, combined with the time it takes to warm up the rod of the temperature sensor, means it takes an amount of energy before the temperature sensor reaches the temperature, where the regulation of the flow by the first flow regulating means sets in. If the temperature of the sensor could be maintained at a higher level, this time and energy could be lowered, thus leading to less waste of heat and thereby energy.

Another problem is when hot water is to be tapped; the delay in the regulation may overheat the water before the regulation sets in, this being both a discomfort and causing a waste of energy. This also gives a risk of calcium scaling in the heat exchanger.

A known compromise is to introduce a sensor accelerator, where in addition to be in thermal contact with the extraction water from the secondary side of the heat exchanger, the temperature sensor is also positioned such that it is in heat exchanging contact with the heat exchanging medium being fed to the heat exchanger, and where a (small) permanent flow of heat exchanging medium is fed to the heat exchanger.

This 'triggers' the temperature sensor to a higher temperature during stand-by, and thus to a much quicker regulation of the flow to the primary side of the heat exchanger, thus lowering the energy losses. The system also ensures a high level of comfort to the user, since the heat exchanger will be heated during stand-by, thus substantially quickly giving the desired hot water for tapping. This constant heating of the heat exchanger, however, will cause cost for the user, this being a disadvantage.

Other systems introduce different kind of temperature sensors with significant quicker responses, but even for such systems the set up according to the present invention offers advantages. Often the system will have a delay by cold water being in the system and / or in general just the time it takes for heat to be exchanged in a cold system.

A publication. EP0120493, disclose an arrangement for the production of hot water by a (zonal) medium delivered by a zonal heating system, led through a (counter- current) heat exchanger, as well as for the storage of hot water in a hot water storage tank, in which, by means of devices, coordinated by a control device, for the control both of the rate of flow of the medium which is delivered at the input of the heat exchanger with a given forward run temperature, and of the rate of flow of the cold water which is supplied at the input of the heat exchanger with a given feed temperature .

Another document, DE3142549, disclose a device for feeding a domestic installation from a distant heating network consists of a combination of a valve with a jet pipe in an addition valve, in which the forward run water is alternatively conducted directly to the consumer and the jet pipe is closed off or, with throttling of the valve, the added water is added to the forward run water through the jet pipe.

Document WO 97/36138 discloses a system according to the preamble of claim 1.

Systems exist solving these problems, but they typically introduce a number of often relatively advanced and expensive parts.

### SUMMARY OF THE INVENTION

The present invention solves such problems by introducing a system according to claim 1. This system comprises a supply line network adapted to transfer a heat transfer medium to at least one heating device, the system further comprising a heat exchanger with a primary side and a secondary side, where the primary side is in fluid communication with a supply line and the secondary side is preferably connected to a water supply and further to means for tapping heated water. The flow to the primary side is controlled by first flow regulating means comprising a temperature sensor, where the temperature sensor is in thermal contact with a first sensor section adapted to receive output fluid from the secondary side, and where the first sensor section is in thermal contact with the second sensor section. Such a setup with first and second sensor sections is also referred to as a sensor accelerator, and as long as there is a flow through the supply line, the temperature sensor is kept at some minimum temperature, which speeds up its response when domestic water is tapped from the secondary side.

Since many households have a permanent flow in the supply line, the second sensor section forms part of the supply line network and is positioned downstream of the connection of the supply line network to the primary side.

According to the invention, the first sensor section forms part of the extraction line of the secondary side.

In an embodiment, the first sensor section at least partly forms part of the heat exchanger, the temperature sensor being at least partly integrated into the heat exchanger, this making a more compact set-up. This is preferably done by at least partly positioning the temperature sensor in or in the vicinity of the outlet to the extraction line. The supply line is then advantageously integrated in the heat exchanger in such a manner that the second sensor section is inside the heat exchanger. Alternatively the supply line then comprises a bypass line comprising the second sensor section in such a manner that the second sensor section is inside the heat exchanger.

To ensure a permanent flow through the supply line, in one embodiment a second bypass line connects the supply line to the return line system of the primary side, or alternatively to the primary side.

In order to make it possible to adjust the flow through this second bypass line, it preferably comprises a flow limiter or second flow regulating means, preferably being adjustable.

### FIGURES

- Fig. 1: A system according to a prior art setup.
- Fig. 2: A system introducing a sensor accelerator.
- Fig. 3: Illustration of a sensor accelerator.
- Fig. 4: A first embodiment according to the present invention introducing a sensor accelerator.
- Fig. 5: A second embodiment according to the present invention introducing a sensor accelerator and a firs position of a bypass line.
- Fig. 6: An alternative embodiment according to the present invention introducing a sensor accelerator and a second position of a bypass line.
- Fig. 7: A first seup according to an embodiment of the present invention introducing a temperature sensor at least partly positioned within the heat exchanger.

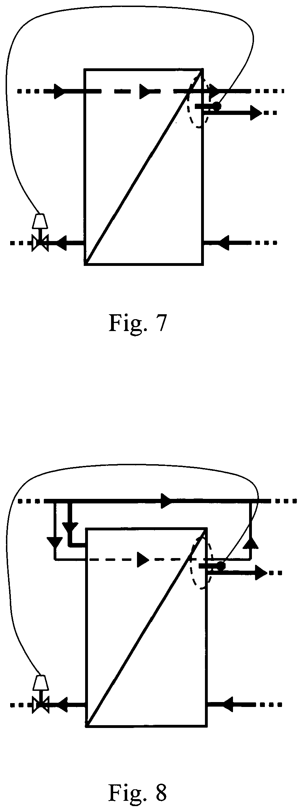

- Fig. 7: A second seup according to an embodiment of the present invention introducing a temperature sensor at least partly positioned within the heat exchanger.

### DETAILED DESCRIPTION OF THE INVENTION

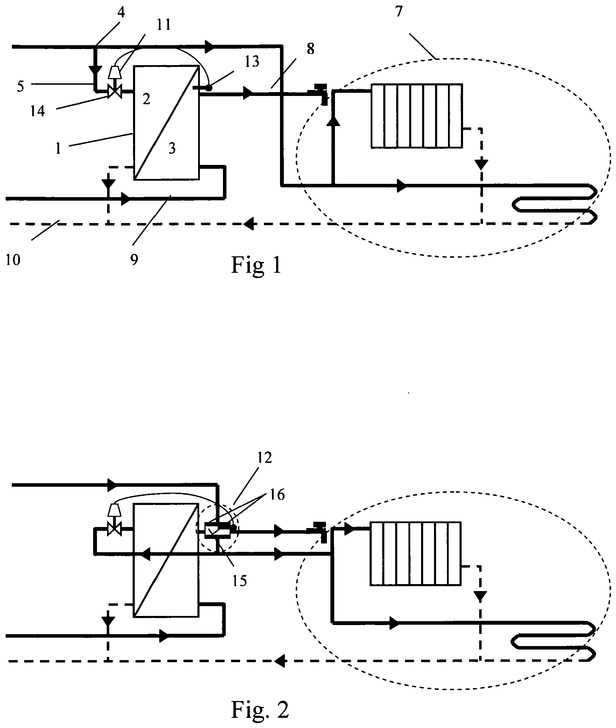

Fig. 1 illustrates a typical set up according to prior art of smaller systems providing hot water for the use in e.g. housings comprising one family houses or dwellings in multi family houses.

The system comprises a number of heat exchanging devices such as a heat exchanger (1) and a plurality of heating devices (7) such as, but not limited to, radiators and floor heating systems. The heat exchanger (1) is usually adapted to heating up domestic water, especially water to be tapped as hot water, e.g. in baths etc.

A network of lines transfers a heat transfer medium between the devices, the network comprising a supply network (4) and a return network (10) connected to the heating devices (7), where the heat transfer medium may be water.

The supply line (4) branches to a primary supply branch (5) connected to the primary side (2) of the heat exchanger (1) and a second supply branch (6) connected to the heating devices (7). The flow through the primary supply branch (5) is regulated by first flow regulating means (11), such as a thermostat comprising a temperature sensor (13) and means to adjust to a chosen set point.

The heating devices (7) naturally include regulation means, such as thermostats, as it is well known in the art.

A hot water extraction line system comprising the extraction line (8) and a water supply line (9) is connected to the secondary side (3) of the heat exchanger (1), where the hot water extraction line (8), is preferably connected to means to tap the hot water when desired.

The temperature sensor (13) is positioned in thermal communication with the hot extraction water in the secondary side (3) of the heat exchanger (1).

The first flow regulating means (1) adjusts the flow of fluid to the primary side (2) of the heat exchanger (1) in response to the temperature measured by the temperature sensor (13) by adjusting the flow to obtain an (adjustable) set point of the measured temperature.

During stand by of the hot water extraction system there are two situations, one being flow control and the second being thermostatic control. In flow control there is no flow to the primary side (2) during stand-by, which leads to a substantially long response time for the user to get hot tapped water of the desired temperature.

In thermostatic control a permanent (optionally dynamic) flow to the primary side (2) is ensured during stand by, which leads to losses of energy since the heat exchanger (1) is constantly heated.

The illustrated system further has the drawbacks of the energy needed and delays in time in relation to the temperature sensor (13). It takes energy to heat up the water in the secondary side (3) of the heat exchanger (1), and this combined with the time it takes to warm up the temperature sensor (13) means it takes an amount of energy before the temperature sensor (13) reaches the temperature, where the regulation of the flow by the first flow regulating means (11) sets in. If the temperature of the temperature senor (13) could be maintained at a higher temperature, this time and energy could be lowered, thus leading to less waste of heat and thereby energy.

Another problem is when hot water is to be tapped; the delay in the regulation may overheat the water before the regulation sets in, which is both a discomfort and causes a waste in energy. This also gives a risk of calcium scaling in the heat exchanger (1).

A known compromise is to introduce a sensor accelerator (12), as it is illustrated in Fig 2, where a section of the primary supply branch (5) is in thermal contact with a section of the extraction line (8) and where the rod of the temperature sensor (13) is in thermal contact with the fluid in this section of the extraction line (8). In this manner, by having a (small) flow in the primary supply branch (5) the temperature sensor (13) is in thermal contact with the heat transfer medium flowing in the supply line (4), at least flowing through the first branch (5) of the supply line (4).

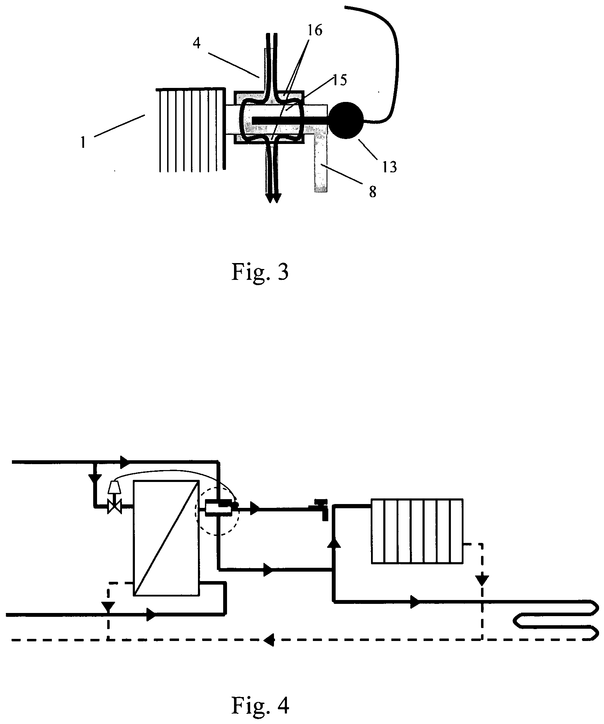

The setup of the sensor accelerator (12) is illustrated in Fig. 3, where the rod of the temperature sensor (13) is inserted into the section of the extraction line (8), in the following being referred to as the first sensor section (15), being in thermal contact with a part of the supply line (4), this section of the supply line (4) in the following being referred to as the second sensor section (16). The first sensor section (15) is then enclosed inside the second sensor section (being it in contact with the heat transferring medium thus flowing around the first sensor section, thereby transferring heat to the hot water within this section of the hot water tapping line, and thereby to the temperature sensor.

The present invention is seen in Fig. 4 and introduces an alternative set up of the sensor accelerator (12), where the second sensor sections (16) is connected to the supply line (4) for the heating devices (7), rather than at the primary supply branch (5) feeding heat transfer medium to the heat exchanger (1), as in the prior art.

In this setup, the flow required by the heating devices (7) influences the temperature of the temperature sensor (13), and it is thereby ensured that the flow to the heat exchanger (1) is at least substantially closed during stand-by. Especially, but not exclusively, it is known that if the heating devices (7) include a floor heating system, then often a substantially permanent flow exists in the supply line (4), and this at least minimizes or even closes the flow to the primary side (2) of the heat exchanger (1) during stand by.

In some periods, such as cold periods like winter, the permanent substantially high flow rate to the heating the system ensures that very little heat is lost from the heat exchanger (1) during stand by since the heating devices (7) ensures a high temperature of the temperature sensor, thus just leaving practically no flow to the primary side. The advantage of a quick response of the temperature regulation when water is tapped is, however, maintained, since the flow through the second sensor section (16) ensures a substantially high minimum stand by temperature of rod of the temperature sensor (13).

In other periods, such as during warm periods like summer, the system has the advantage of having a permanent flow to the primary side (2) of the heat exchanger (1) since the flow to the heating devices (7) is small, thus giving the comfort of a fast delivery of hot water. Households having a small flow around the year further have the advantage of maintaining the advantages of a quick response of the temperature regulation.

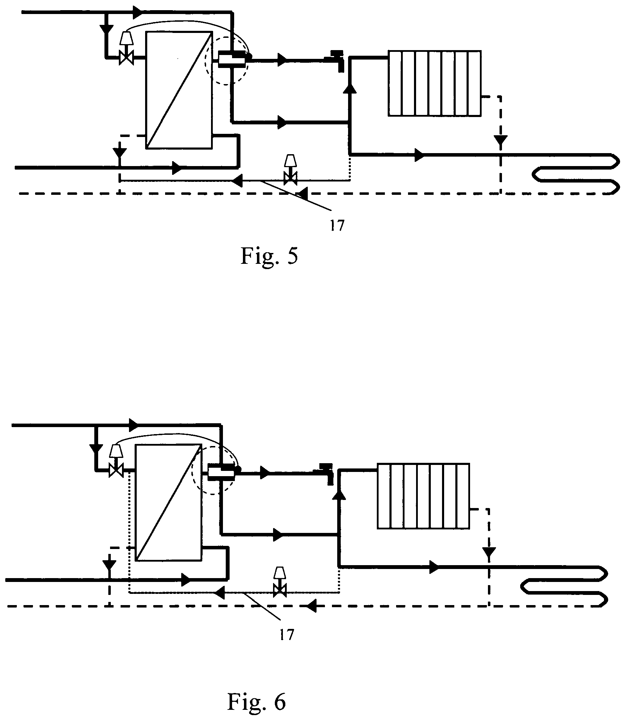

Especially, but not exclusively, in systems without floor heating among the heating devices (7), or just without a substantially permanent flow thereto, the system advantageously could include a second bypass line (17) connecting the supply line (4) to the return line system (10), the connection to the supply line (4) being downstream of the sensor accelerator (12). The flow through the second bypass line (17) is regulated at a chosen set point by a second flow regulating means (18), see Fig. 5. This gives a permanent flow through at least the supply line (4), and thus through the second sensor section (16) and the sensor accelerator (12) and independence to the operating conditions of the heating devices (7).

In an alternative set up seen in Fig. 6, the second bypass line (17) is connected to the primary side (2) of the heat exchanger (1). This ensures a heated heat exchanger (1) during stand-by, but again with an much improved regulation response times compared to systems not including sensor accelerators (12). This increases the comfort due to quick delivery of hot water during tapping, but still with a reduced heat waste in the heat exchanger (1).

In a more advanced embodiment of the present invention, the sensor accelerator (12) is integrated in a heat exchanger (1).

In the heat exchanger system in Fig 7, the supply line (4) is directly connected to the heat exchanger (1), and from the heat exchanger (1) to the heating devices (7). During stand-by, the heat from the supply line (4) will be transferred through the heat exchanger (1) to the temperature sensor (13) being positioned in, or at least in thermal contact with, the outlet of the secondary side (3) to the extraction line (8). By positioning the attachment of the supply line (4) to the heat exchanger in the vicinity of the outlet to the extraction line (8) it is obtained that only a limited part of the heat exchanger (1) is heated by the hot heat transfer medium flowing through the supply line (4), and that this will affect the temperature sensor (13). In this manner an integrated sensor accelerator (12) is formed having a first sensor section (16) being in the secondary side (3) in the outlet to the extraction line (8) and a second sensor section (16) being the part of the supply line (4) inside the heat exchanger (1).

An alternative to this system is shown in Fig. 8, where the supply line (4) is not directly connected to the heat exchanger (1), but is connected through a small bypass line (20) also being in the vicinity of the temperature sensor (13) being in the secondary side (3) in the outlet to the extraction line (8).

## Claims

1. System comprising a supply line network (4) adapted to transfer a heat transfer medium to at least one heating device (7), the system further comprising a heat exchanger (1) with a primary side (2) and a secondary side (3), where the primary side (2) is in fluid communication with said supply line (4), and where the flow to the primary side (2) is controlled by first flow regulating means (14) comprising a temperature sensor (13), wherein the temperature sensor (13) is in thermal contact with a first sensor section (15) adapted to receive output fluid from the secondary side (3), the first temperature section (15) forming part of an extraction line (8) of the secondary side (3),
**characterized in that** the first sensor section (15) is enclosed inside and in thermal contact with a second sensor section (16), where the second sensor section (16) forms part of the supply line network (4) and is positioned downstream of the connection of the supply line network (4) to the primary side (2), so that the heat transferring medium through the supply line (4) can flow around the first sensor section (15) to transfer heat to the temperature sensor (13).

2. System according to claim 1, wherein the first sensor section (15) at least partly forms part of the heat exchanger (1), the temperature sensor (13) at least partly being integrated in the heat exchanger (1).

3. System according to claim 2, wherein the temperature sensor (13) is at least partly positioned in or in the vicinity of the outlet to the extraction line (8).

4. System according to one of claims 2 or 3, wherein the supply line (4) is integrated in the heat exchanger (1) in such a manner that the second sensor section (16) is inside the heat exchanger (1).

5. System according to one of claims 2 or 3, wherein the supply line (4) comprises a bypass line (20) comprising the second sensor section (16) in such a manner that the second sensor section (16) is inside the heat exchanger (1).

6. System according to any of the preceding claims, where a second bypass line (17) connects the supply line (4) to a return line system (10) of the primary side (2).

7. System according to any of the preceding claims, where a second bypass line (17) connects the supply line (4) to the primary side (2).

8. System according to claim 6 or 7, wherein the second bypass line (17) comprises second flow regulating means (18).

## Patentansprüche

1. System, umfassend ein Versorgungsleitungsnetz (4), das ausgelegt ist, ein Wärmeübertragungsmittel zu mindestens einer Heizvorrichtung (7) zu übertragen, wobei das System ferner einen Wärmetauscher (1) mit einer Primärseite (2) und einer Sekundärseite (3) umfasst, wobei die Primärseite (2) in Fluidverbindung mit der Versorgungsleitung (4) ist, und wobei der Zufluss zu der Primärseite (2) durch erste Durchflussregelungsmittel (14) gesteuert ist, die einen Temperatursensor (13) umfassen,
wobei der Temperatursensor (13) in thermischem Kontakt mit einem erste Sensorabschnitt (15) ist, der ausgelegt ist, Ausgangsfluid von der Sekundärseite (3) aufzunehmen, wobei der erste Temperaturabschnitt (15) einen Teil einer Entnahmeleitung (8) der Sekundärseite (3) bildet,
**dadurch gekennzeichnet, dass** der erste Sensorabschnitt (15) in einen zweiten Sensorabschnitt (16) eingeschlossen und mit diesem in thermischem Kontakt ist, wobei der zweite Sensorabschnitt (16) einen Teil des Versorgungsleitungsnetzes (4) bildet und stromabwärts von dem Anschluss des Versorgungsleitungsnetzes (4) an die Primärseite (2) positioniert ist, so dass das Wärmeübertragungsmittel durch die Versorgungsleitung (4) um den ersten Sensorabschnitt (15) fließen kann, um Wärme auf den Temperatursensor (13) zu übertragen.

2. System nach Anspruch 1, wobei der erste Sensorabschnitt (15) zumindest teilweise einen Teil des Wärmetauschers (1) bildet, wobei der Temperatursensor (13) zumindest teilweise in den Wärmetauscher (1) integriert ist.

3. System nach Anspruch 2, wobei der Temperatursensor (13) zumindest teilweise in oder in der Nähe des Auslasses zu der Entnahmeleitung (8) positioniert ist.

4. System nach einem der Ansprüche 2 oder 3, wobei die Versorgungsleitung (4) in den Wärmetauscher (1) derart integriert ist, dass sich der zweite Sensorabschnitt (16) in dem Wärmetauscher (1) befindet.

5. System nach einem der Ansprüche 2 oder 3, wobei die Versorgungsleitung (4) eine Überbrückungsleitung (20) umfasst, die den zweiten Sensorabschnitt (16) derart umfasst, dass sich der zweite Sensorabschnitt (16) in dem Wärmetauscher (1) befindet.

6. System nach einem der vorhergehenden Ansprüche, wobei eine zweite Überbrückungsleitung (17) die Versorgungsleitung (4) mit einem Rücklaufleitungssystem (10) der Primärseite (2) verbindet.

7. System nach einem der vorhergehenden Ansprüche, wobei eine zweite Überbrückungsleitung (17) die Versorgungsleitung (4) mit der Primärseite (2) verbindet.

8. System nach Anspruch 6 oder 7, wobei die zweite Überbrückungsleitung (17) zweite Durchflussregelungsmittel (18) umfasst.

## Revendications

1. Système comprenant un réseau de conduites d'alimentation (4) conçu pour transférer un agent de transfert de chaleur à au moins un dispositif de chauffage (7), le système comprenant en outre un échangeur de chaleur (1) ayant un côté primaire (2) et un côté secondaire (3), où le côté primaire (2) est en communication fluidique avec ladite conduite d'alimentation (4) et où l'écoulement vers le côté primaire (2) est régulé par un premier moyen de régulation d'écoulement (14) comprenant un capteur de température (13),
dans lequel le capteur de température (13) est en contact thermique avec une première section de capteur (15) conçue pour recevoir un fluide de sortie en provenance du côté secondaire (3), la première section de température (15) formant une partie d'une conduite d'extraction (8) du côté secondaire (3),
**caractérisé en ce que** la première section de capteur (15) est enfermée à l'intérieur d'une seconde section de capteur (16), et est en contact thermique avec cette dernière, où la seconde section de capteur (16) forme une partie du réseau de conduites d'alimentation (4) et est positionnée en aval du raccordement du réseau de conduites d'alimentation (4) au côté primaire (2) de telle sorte que l'agent de transfert de chaleur par le biais de la conduite d'alimentation (4) puisse s'écouler autour de la première section de capteur (15) pour transférer de la chaleur au capteur de température (13).

2. Système selon la revendication 1, dans lequel la première section de capteur (15) forme, au moins partiellement, une partie de l'échangeur de chaleur (1), le capteur de température (13) étant, au moins partiellement, intégré dans l'échangeur de chaleur (1).

3. Système selon la revendication 2, dans lequel le capteur de température (13) est, au moins partiellement, positionné à la sortie, ou à proximité de la sortie, de la conduite d'extraction (8).

4. Système selon l'une des revendications 2 ou 3, dans lequel la conduite d'alimentation (4) est intégrée dans l'échangeur de chaleur (1) de telle manière que la seconde section de capteur (16) se trouve à l'intérieur de l'échangeur de chaleur (1).

5. Système selon l'une des revendications 2 ou 3, dans lequel la conduite d'alimentation (4) comprend une conduite de dérivation (20) comprenant la seconde section de capteur (16) de telle manière que la seconde section de capteur (16) se trouve à l'intérieur de l'échangeur de chaleur (1).

6. Système selon l'une quelconque des revendications précédentes, où une seconde conduite de dérivation (17) relie la conduite d'alimentation (4) à un système de conduite de retour (10) du côté primaire (2).

7. Système selon l'une quelconque des revendications précédentes, où une seconde conduite de dérivation (17) relie la conduite d'alimentation (4) au côté primaire (2).

8. Système selon la revendication 6 ou 7, dans lequel la seconde conduite de dérivation (17) comprend un second moyen de régulation d'écoulement (18).
